# EUROPÄISCHE PATENTSCHRIFT

(11) **EP 2 975 357 B1**
(45) Veröffentlichungstag und Bekanntmachung des Hinweises auf die Patenterteilung: **12.07.2017**
(21) Anmeldenummer: 15166912.4
(22) Anmeldetag: 08.05.2015
(51) Int. Cl.: G01B 5/00, G01B 5/24, G01D 5/00, G01D 5/244

(54) **VORRICHTUNG MIT EINER ABTASTEINHEIT UND EINER MONTAGEHILFE UND VERFAHREN ZUR MONTAGE DER ABTASTEINHEIT**
DEVICE COMPRISING A SCANNING UNIT AND AN ASSEMBLY AID AND METHOD FOR ASSEMBLING THE SCANNING UNIT
DISPOSITIF DOTÉ D'UNE UNITÉ DE BALAYAGE ET D'UNE AIDE AU MONTAGE ET PROCÉDÉ DE MONTAGE DE L'UNITÉ DE BALAYAGE

(30) Priorität: 17.07.2014 DE 102014213955
(43) Veröffentlichungstag der Anmeldung: 20.01.2016
(73) Patentinhaber: Dr. Johannes Heidenhain GmbH, 83301 Traunreut (DE)
(72) Erfinder: Kühler, Markus, 83365 Nußdorf (DE); Pucher, Wolfgang, 83278 Traunstein (DE)

(56) Entgegenhaltungen:
- EP-A2- 1 092 944
- DE-A1- 3 740 744
- GB-A- 2 350 429
- GB-A- 2 378 509
- US-A- 4 115 925
- US-A1- 2014 096 404

## Beschreibung

### GEBIET DER TECHNIK

Die vorliegende Erfindung betrifft eine Vorrichtung mit einer Abtasteinheit und einer Montagehilfe nach dem Oberbegriff des Anspruchs 1.

Weiterhin betrifft die Erfindung ein Verfahren zur Montage einer Abtasteinheit nach dem Anspruch 10.

### STAND DER TECHNIK

Positionsmesseinrichtungen werden insbesondere in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie, beispielsweise in Wafersteppern sowie Bondern eingesetzt. Dabei wird der Maßstab an der Antriebseinheit (z. B. Linearmotor) direkt angebaut oder der Maßstab an einem durch die Antriebseinheit angetriebenen Bauteil angebaut. Stationär gegenüber dem bewegten Maßstab ist eine Abtasteinheit der Positionsmesseinrichtung an einem anderen Maschinenteil angeordnet, dessen Position gemessen werden soll.

Aufgrund der immer höheren Anforderungen an die Auflösung bzw. Genauigkeit der Positionsmessung ist bei der Montage eine präzise Zuordnung der Abtasteinheit gegenüber dem Maßstab immer wichtiger. Um diese geforderte Zuordnung zu erreichen, sind verschiedene Maßnahmen bekannt geworden.

Eine gattungsgemäße Abtasteinheit und Positionsmesseinrichtung ist beispielsweise in der EP 0 397 970 A1 beschrieben. Zur Montage der Abtasteinheit ist eine Montagehilfe als Bauteil zwischen dem zu messenden Objekt und der Abtasteinheit vorgesehen. Diese Montagehilfe umfasst einen Stift, um den die Abtasteinheit mittels Justierschrauben mit exzentrischen Ansätzen verdrehbar bzw. verschwenkbar ist. Diese Zwischenschaltung einer Montagehilfe erfordert relativ viel Bauraum. Weiterhin sind die Anforderungen an die Fertigungstoleranzen groß, um eine spielfreie Justierung zu erreichen.

Eine Montagehilfe zur Justierung der Abtasteinheit ist auch in der DE 37 40 744 A1 offenbart. Diese Montagehilfe weist eine Montageebene und zwei Justierschrauben auf. Die Abtasteinheit ist mittels der beiden Justierschrauben auf der Montageebene der Montagehilfe in radialer und tangentialer Richtung vierschiebbar.

### ZUSAMMENFASSUNG DER ERFINDUNG

Der vorliegenden Erfindung liegt die Aufgabe zugrunde, eine Vorrichtung mit einer Abtasteinheit einer Positionsmesseinrichtung und einer Montagehilfe anzugeben, mit der eine einfache Montage mit hoher Genauigkeit ermöglicht wird.

Diese Aufgabe wird durch eine Vorrichtung mit den Merkmalen des Anspruchs 1 gelöst.

Weiterhin liegt der Erfindung die Aufgabe zugrunde, ein Verfahren zur möglichst einfachen Montage anzugeben, mit der die geforderte Genauigkeit der Zuordnung zwischen Abtasteinheit und Maßstab ermöglicht wird.

Diese Aufgabe wird durch ein Verfahren mit den Merkmalen des Anspruchs 10 gelöst.

Vorteilhafte Ausführungen der erfindungsgemäßen Vorrichtung und des Verfahrens ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: einen Maßstab und eine Abtasteinheit einer Längenmesseinrichtung;
- Figur 2: die Abtasteinheit bei einem ersten Montageschritt;
- Figur 3: eine Montagehilfe;
- Figur 4: die Abtasteinheit mit der Montagehilfe bei einem zweiten Montageschritt;
- Figur 5: die Abtasteinheit im justierten Zustand;
- Figur 6: eine weitere Möglichkeit zur Ausführung des ersten Montageschritts;
- Figur 7: eine Möglichkeit zur Justierung der Abtasteinheit mit einem Werkzeug;
- Figur 8: ein zweites Ausführungsbeispiel einer Montagehilfe;
- Figur 9: die Abtasteinheit mit der Montagehilfe gemäß Figur 8 bei dem zweiten Montageschritt, und
- Figur 10: die Anwendung der Erfindung bei einer Winkelmesseinrichtung.

### BESCHREIBUNG DER AUSFÜHRUNGSFORMEN

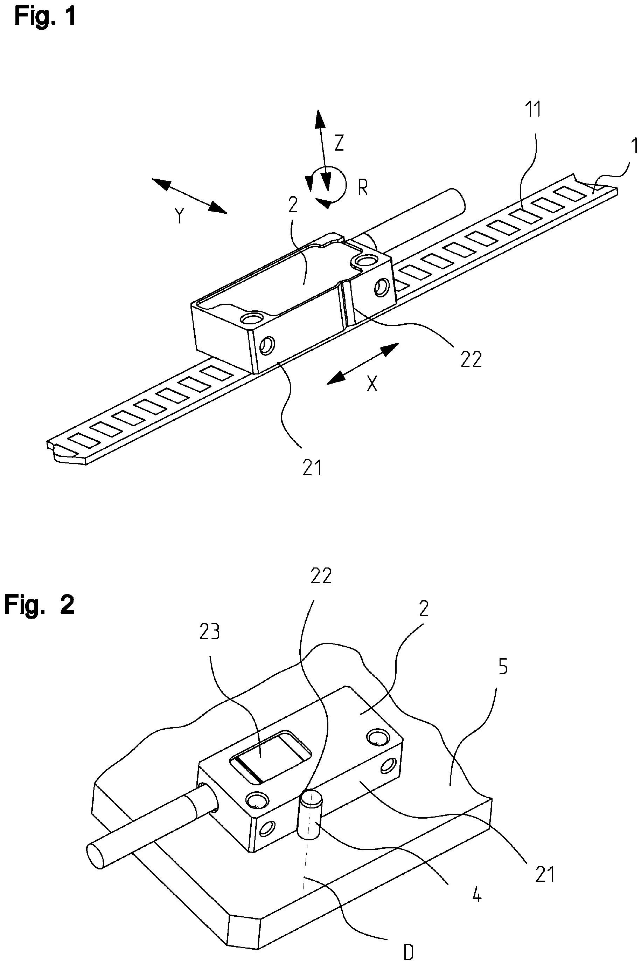

Ein erstes Ausführungsbeispiel der erfindungsgemäßen Vorrichtung wird nachfolgend anhand der Figuren 1 bis 5 und Figur 7 erläutert.

Die dargestellte Positionsmesseinrichtung ist als Längenmesseeinrichtung ausgeführt und umfasst einen Maßstab 1 und eine relativ dazu in Messrichtung X bewegliche Abtasteinheit 2. Der Maßstab 1 trägt eine inkrementale Messteilung 11, die von einer Detektoreinheit der Abtasteinheit 2 abtastbar ist. Bei der Abtastung der Messteilung 11 erzeugt die Detektoreinheit in bekannter Weise positionsabhängige elektrische periodische Messsignale. Dabei umfasst die Abtasteinheit 2 ein für das Abtaststrahlenbündel transparentes Abtastfenster 23, das in Richtung des bei der Positionsmessung abzutastenden Maßstabs 1 weist und deshalb in der Figur 1 nicht sichtbar ist. Die Ansichten gemäß der Figuren 2, 4, 5 und 7 ohne Maßstab 1 zeigen das Abtastfenster 23 der Abtasteinheit 2.

Bei der Montage der Abtasteinheit 2 an ein zu messendes Objekt 5 sind vorgegebene Anbaumaße abhängig von der Art des Abtastprinzips und abhängig von der Teilungsperiode der Messteilung 11 einzuhalten. Diese Anbaumaße werden vom Hersteller der Positionsmesseinrichtung vorgegeben und müssen vom Anwender beim Anbau an das zu messende Objekt 5 eingehalten werden. Die Anbaumaße in den in Figur 1 eingezeichneten Richtungen Z und Y senkrecht zur Messrichtung X sind in der Regel relativ einfach mittels Anschlägen und Abstandshalter einzuhalten. Es hat sich aber gezeigt, dass die winkelmäßige Zuordnung der Abtasteinheit 2 zum Maßstab 1 relativ schwer einzustellen ist. Dabei handelt es sich um die Winkellage R. Diese Winkellage R ist ein Verdrehwinkel um die Achse Z, wobei Z senkrecht zur Ebene der Messteilung 11 ausgerichtet ist. Die Richtung Z ist also die Richtung, in der der Maßstab 1 von der Abtasteinheit 2 abgetastet wird. Der Winkel R wird auch als Gierwinkel oder Moiré-Winkel bezeichnet und die Einstellung dieses Winkels wird Moire-Einstellung genannt. Diese winkelmäßige Zuordnung ist individuell für jede Kombination von Abtasteinheit 2 und Maßstab 1 einzustellen.

Gemäß der Erfindung wird nun die geforderte Winkellage bzw. Drehlage der Abtasteinheit 2, also der Winkel R, mit Hilfe einer Montagehilfe 3 eingestellt. Während der Justierung werden die elektrischen Abtastsignale der Abtasteinrichtung 2 überwacht, wobei die Amplitude und / oder die gegenseitige Phasenlage mehrerer der Abtastsignale ein Maß für die Güte der Abtastsignale und somit auch der geforderten Zuordnung zwischen Abtasteinheit 2 und Maßstab 1 ist.

Die Montagehilfe 3 ist derart ausgebildet, dass die Abtasteinheit 2 um eine Drehachse D eines Referenzelementes 4 drehbar ist. Die Drehachse D verläuft dabei parallel zu der in Figur 1 eingezeichneten Achse Z.

Die Figur 2 zeigt die Abtasteinheit 2 bei einem ersten Montageschritt. Das Referenzelement 4 ist dabei ein Stift, der ortsfest an dem zu messenden Objekt 5 befestigt ist. Dieses Referenzelement 4 bildet die Drehachse D, um welche die Abtasteinheit 2 zur Justierung des Moire-Winkels verdreht wird. Anstelle des Stiftes kann auch eine Hülse Verwendung finden.

Die Abtasteinheit 2 ist dazu ausgebildet, um mit dem Referenzelement 4 durch Anlage einen Formschluss zu bilden, welcher die Abtasteinheit 2 relativ zum Referenzelement 4 in Richtungen X, Y quer zur Drehachse D fesselt. Dadurch ist eine Drehbewegung um die durch den Formschluss eindeutig definierte Drehachse D ermöglicht. Dieser Formschluss wird in vorteilhafter Weise dadurch gebildet, dass in einer Außenwand 21 der Abtasteinheit 2 eine Ausnehmung 22 vorgesehen ist. Die Ausnehmung 22 ist im Beispiel als V-förmige Nut bzw. Kerbe ausgebildet, in welche die Außenfläche des kreisrunden Referenzelementes 4 einlegbar ist und mit der Außenfläche des kreisrunden Referenzelementes 4 ein Drehlager bildet. Die Ausnehmung 22 ist möglichst nahe am Schwerpunkt der Abtastung, also in möglichst kurzer Entfernung zum Abtastfenster 23 angeordnet.

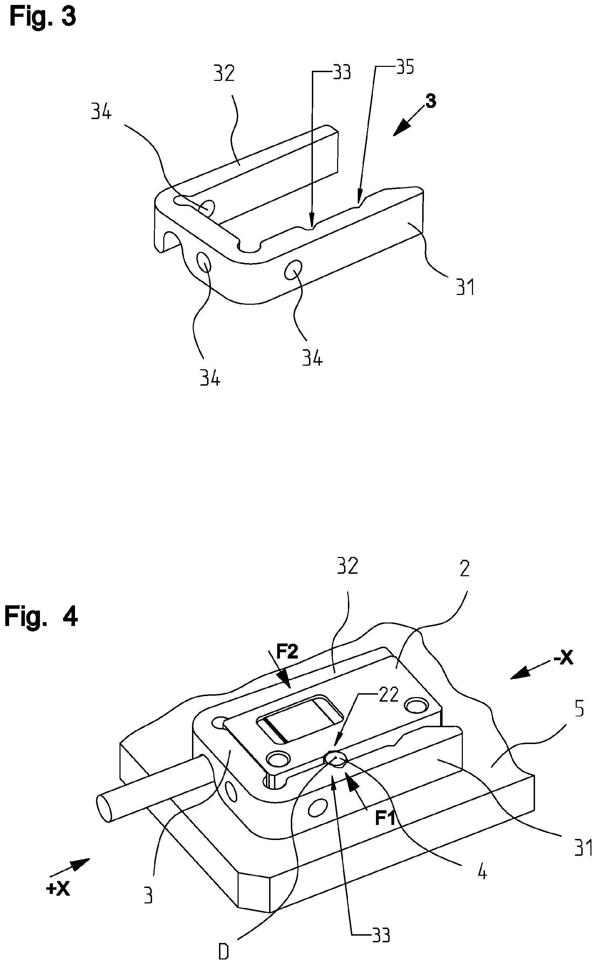

Erfindungsgemäß ist nun die in Figur 3 im Detail dargestellte Montagehilfe 3 vorgesehen, die dazu ausgebildet ist, die Abtasteinheit 2 an der Montagehilfe 3 derart zu halten, dass die Abtasteinheit 2 mittels der sie tragenden Montagehilfe 3 um die Drehachse D des Referenzelementes 4 schwenkbar ist. Diese Halterung erfolgt derart, dass die Montagehilfe 3 die Abtasteinheit 2 an das Referenzelement 4 drängt. Dadurch ist eine spielfreie Anlage der Abtasteinheit 2 an das Referenzelement 4 gewährleistet. Die Halterung erfolgt auch derart, dass die Montagehilfe 3 mit der Abtasteinheit 2 einen drehfesten Formschluss bildet, der gewährleistet, dass die Abtasteinheit 2 mittels der Montagehilfe 3 um die Drehachse D drehbar ist. In Figur 4 ist dieser weitere Montageschritt dargestellt, bei dem die Montagehilfe 3 in Richtung +X auf die Abtasteinheit 2 aufgeschoben ist und die Montagehilfe 3 die Abtasteinheit 2 an das stiftförmige Referenzelement 4 drängt sowie der drehfeste Formschluss zwischen der Montagehilfe 3 und der Abtasteinheit 2 hergestellt ist.

Die Montagehilfe 3 weist zwei einander gegenüberliegende Arme 31, 32 auf, welche die Abtasteinheit 2 umgreifen und zwischen denen die Abtasteinheit 2 klemmend aufgenommen und gehalten wird. Zur Erzeugung der Klemmkraft ist zumindest einer dieser beiden Arme 31, 32 elastisch federnd ausgebildet, so dass die Abtasteinheit 2 an das Referenzelement 4 gedrängt wird. Die Arme 31 und 32 generieren eine Kraft F1 und Gegenkraft F2 derart, dass einerseits die Abtasteinheit 2 an der Montagehilfe 3 klemmend gehalten wird und andererseits die Abtasteinheit 2 an das Referenzelement 4 gedrängt wird. Wie aus der Figur 4 ersichtlich ist, ist es besonders vorteilhaft, wenn auch die Montagehilfe 3 in der dargestellten Montagestellung formschlüssig am Referenzelement 4 derart fixiert ist, dass eine ortsfeste Fesselung in den Richtungen X, Y, also quer zur Drehachse D gewährleistet ist. Dieser Formschluss ist gebildet durch die kreisrunde Außenfläche des Referenzelementes 4 und einer korrespondierenden Ausnehmung 33 in der Montagehilfe 3, insbesondere wiederum in Form einer V-Nut bzw. einer Kerbe. Die Abtasteinheit 2 ist somit zwischen dem Referenzelement 4 und dem Arm 32 der Montagehilfe 3 eingespannt und das Referenzelement 4 ist zwischen der Abtasteinheit 2 und dem Arm 31 der Montagehilfe 3 eingespannt.

Im dargestellten Ausführungsbeispiel ist das Abtastfenster 23 und somit auch die Ausnehmung 22 der Abtasteinheit 2 nicht mittig (in Richtung X betrachtet) angeordnet. Um es in diesem Fall zu ermöglichen, die Montagehilfe 3 alternativ auch von der Richtung -X auf die Abtasteinheit 2 aufschieben zu können, ist in der Montagehilfe 3 eine weitere Ausnehmung 35 vorhanden. Wird die Montagehilfe 3 nun in der in Figur 4 eingezeichneten Richtung -X aufgeschoben, wirkt die Ausnehmung 35 formschlüssig mit dem Referenzelement 4 zusammen.

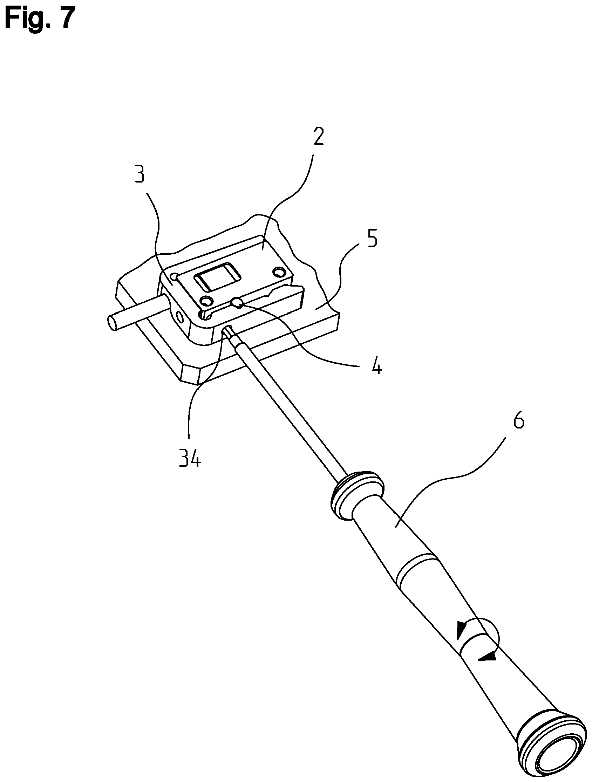

Bereits durch das Vorsehen der Montagehilfe 3 allein ist die Handhabbarkeit der Abtasteinrichtung 2 während der Montage und des Justiervorganges verbessert. Die Handhabbarkeit kann durch gezielte Maßnahmen aber noch weiter verbessert werden. Wie in der Figur 3 dargestellt ist, kann hierzu in der Montagehilfe 3 zumindest ein Loch 34 vorgesehen sein, das quer zur Drehachse D verläuft. Dieses Loch 34 ist derart dimensioniert, dass ein Werkzeug 6, beispielsweise ein Schraubendreher, möglichst passgenau einsteckbar ist, um die Montagehilfe 3 mit der darin eingespannten Abtasteinheit 2 um die Drehachse D besonders feinfühlig zu verschwenken, wie Figur 7 zeigt. Eine derartige Ausgestaltung eignet sich besonders für beengte Einbauverhältnisse. Vorteilhaft kann es sein, mehrere derartige Löcher 34 vorzusehen, die von verschiedenen Seiten bzw. Richtungen innerhalb der X-Y-Ebene her zugänglich sind.

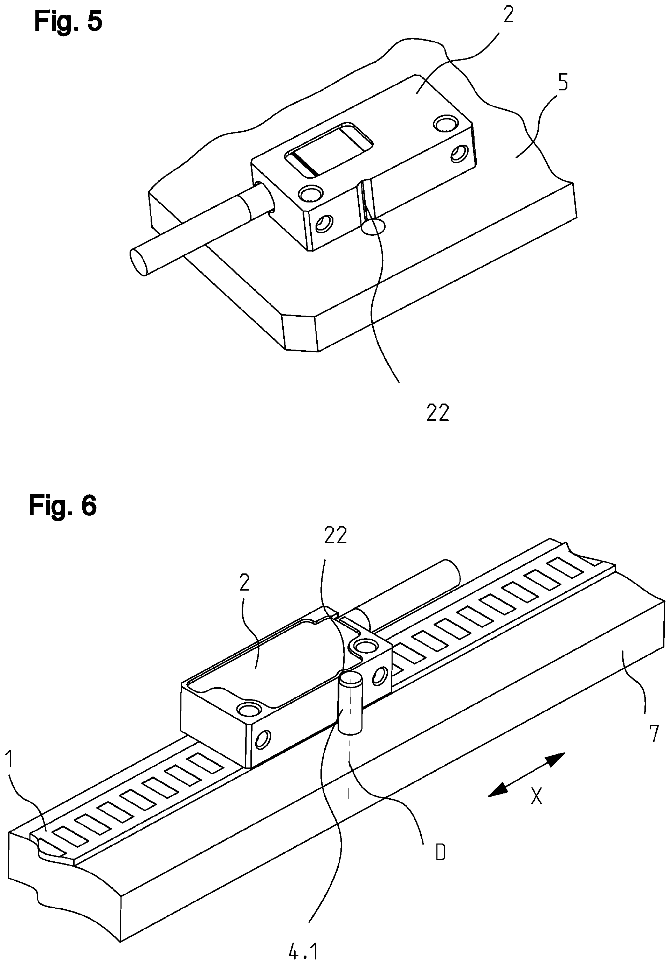

Die Montagehilfe 3 ist derart ausgebildet, dass diese nach erfolgter Justierung und Montage der Abtasteinheit 2 an das zu messende Objekt 5 von der Abtasteinheit 2 entfernbar ist. Die Montagehilfe 3 kann in einer Richtung senkrecht zur Drehachse D, in vorteilhafter Weise in Messrichtung X, unter Überwindung der Klemmkraft der beiden Arme 31, 32 von der Abtasteinheit 2 und vom Referenzelement 4 abgezogen werden. Sollte es aus platzgründen erforderlich sein, kann auch das Referenzelement 4 vom zu messenden Objekt 5 entfernt werden. Die nach erfolgter Justierung am zu messenden Objekt 5 ortsfest befestigte Abtasteinheit 2 ist in Figur 5 dargestellt. Die ortsfeste Befestigung am zu messenden Objekt 5 kann beispielsweise durch nicht dargestellte Schrauben oder durch Kleben erfolgen.

Die Figur 6 zeigt eine weitere Möglichkeit zur Bildung des Referenzelementes. In diesem Beispiel ist ein Referenzelement 4.1 an dem zu messenden Objekt 7 vorgesehen, an dem der Maßstab 1 befestigt ist. Dieses Referenzelement 4.1 kann nun einerseits als Anschlag zum Ausrichten des Maßstabs 1 verwendet werden und andererseits auch zur erfindungsgemäßen Justierung der Abtasteinheit 2.

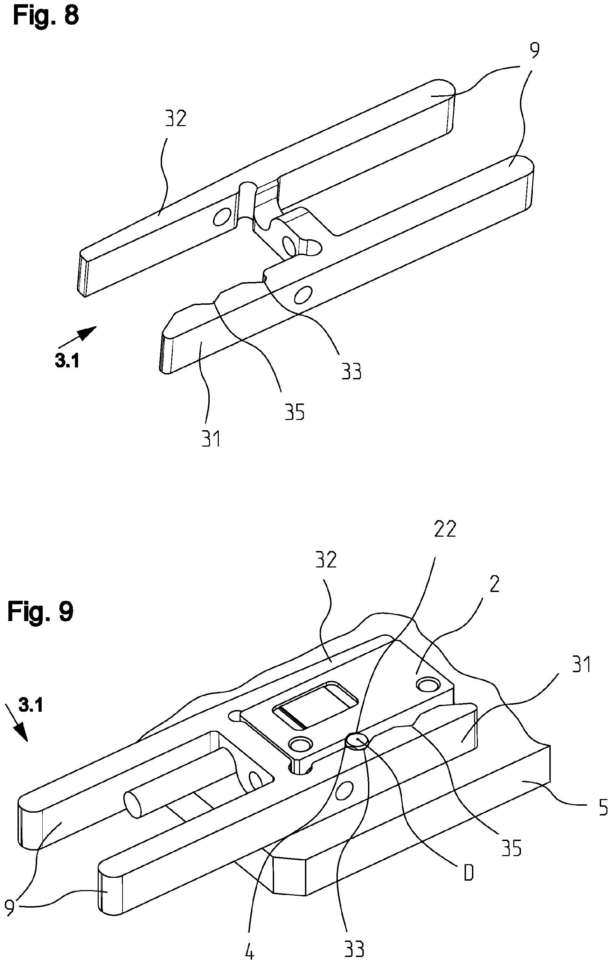

Anhand der Figuren 8 und 9 wird nachfolgend eine weitere Montagehilfe 3.1 erläutert. Dabei werden gleichwirkende Bauteile mit dem gleichen Bezugszeichen versehen wie bei dem oben erläuterten Ausführungsbeispiel.

Diese Montagehilfe 3.1 weist wiederum zwei Arme 31, 32 auf, die einen Zwischenraum bilden, in dem einerseits die Abtasteinheit 2 eingespannt gehalten ist und andererseits die Abtasteinheit 2 an das Referenzelement 4 gedrängt wird. Im Unterschied zur oben erläuterten Montagehilfe 3 ist bei dieser Montagehilfe 3.1 eine Handhabe 9 einstückig angeformt. Diese Handhabe 9 ist ausgebildet als Verlängerungen der Arme 31, 32. Einerseits kann diese Handhabe 9 die Justierung der Montagehilfe 3.1 erleichtern, indem diese einen Griff sowie einen Hebel bildet und andererseits kann damit auch die Klemmkraft aufgehoben werden, um ein Abziehen der Montagehilfe 3.1 von der Abtasteinheit 2 zu erleichtern. Die Funktion ist dabei vergleichbar mit einer Wäscheklammer.

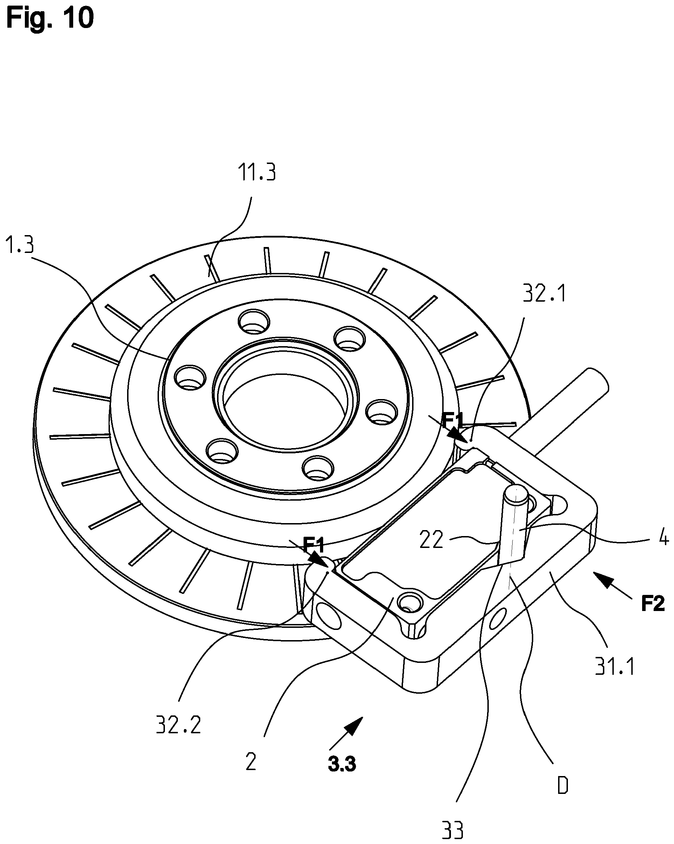

Die Erfindung ist auch bei Winkelmesseinrichtungen einsetzbar. Ein Ausführungsbeispiel wird nachfolgend anhand der Figur 10 näher erläutert. Zur Winkelmessung ist wiederum die Abtasteinheit 2 vorgesehen, welche eine Messteilung 11.3 eines Maßstabs 1.3 abtastet. In diesem Fall ist der Maßstab 1.3 als Teilscheibe ausgeführt, alternativ kann er auch in Form einer Trommel ausgebildet sein, wobei die Messteilung dann auf der Stirnseite oder der Mantelfläche vorgesehen sein kann. Die Abtasteinheit 2 ist auch in diesen Fällen bei der Montage an ein zu messendes Objekt mit der vom Hersteller vorgegebenen Genauigkeit zu montieren. Hierzu ist wiederum eine Montagehilfe 3.3 vorgesehen, mit der die Abtasteinheit 2 um die Drehachse D des Referenzelementes 4 drehbar ist. Eine Außenwand der Abtasteinheit 2 weist eine Ausnehmung 22 in Form einer Kerbe auf, welche mit der kreisrunden Oberfläche des Referenzelementes 4 einen Formschluss bildet, wie bereits oben erläutert. Im Unterschied zu den oben erläuterten Beispielen sind die Arme 31.1, 32.1, 32.2 der Montagehilfe 3.3 zum klemmenden Umgreifen der Abtasteinheit 2 etwas anders ausgestaltet. Die Kraft F1, F2 zum klemmenden Halten der Abtasteinheit 2 an der Montagehilfe 3.3 und zum Andrängen der Abtasteinheit 2 an das Referenzelement 4 wird durch die zwei armförmigen Abschnitte 32.1 und 32.2 eingeleitet. Der Arm 31.1 wirkt in diesem Fall als Gegenhalter, um einerseits die Abtasteinheit 2 spielfrei an eine Seite des Referenzelementes 4 zu drängen und andererseits die Montagehilfe 3.3 spielfrei an die gegenüberliegende Seite des Referenzelementes 4 zu drängen.

Die oben erläuterte Klemmkraft F1, F2 wird durch das im Anspruch 1 genannte Mittel der Montagehilfe 3, 3.1, 3.3 eingeleitet. Diese Mittel leiten eine Kraft ein, welche die Abtasteinheit 2 an das Referenzelement 4, 4.1 drängt, wobei der Begriff drängt die Bedeutung von andrücken hat. Vorteilhaft ist dabei, wenn die Mittel elastische bzw. federnde Mittel sind, um einen spielfreien Kontakt auch während der Drehung der Abtasteinheit 2 um das Referenzelement 4, 4.1 zu gewährleisten. Besonders vorteilhaft ist, wenn die Kraft durch eine elastische bzw. federnde Ausbildung zumindest eines der Arme 31, 32, 31.1, 32.1, 32.2 der Montagehilfe 3, 3.1, 3.3 realisiert ist, welcher die Abtasteinheit 2 klemmend an der Montagehilfe 3, 3.1, 3.3 hält.

Die Erfindung wurde anhand des besonders vorteilhaften lichtelektrischen Abtastprinzips beispielhaft erläutert. Dabei umfasst die Abtasteinheit 2 das für das Abtaststrahlenbündel transparente Abtastfenster 23, das in Richtung des bei der Positionsmessung abzutastenden Maßstabs 1 weist. Die Erfindung ist aber nicht darauf beschränkt und ist auch bei induktiven, magnetischen oder kapazitiven Abtastprinzipien erfolgreich umsetzbar.

## Patentansprüche

1. Vorrichtung mit einer Abtasteinheit (2) und einer Montagehilfe (3, 3.1, 3.3) zur Justierung der Abtasteinheit (2),
**dadurch gekennzeichnet, dass**
die Montagehilfe (3, 3.1, 3.3) dazu ausgebildet ist, die Abtasteinheit (2) an der Montagehilfe (3, 3.1, 3.3) derart zu halten, dass die Abtasteinheit (2) mittels der sie tragenden Montagehilfe (3, 3.1, 3.3) um eine Drehachse (D) eines Referenzelementes (4, 4.1) schwenkbar ist, wobei die Montagehilfe (3, 3.1, 3.3) mit der Abtasteinheit (2) einen drehfesten Formschluss bildet und wobei die Montagehilfe (3, 3.1, 3.3) Mittel (31, 32; 31.1, 32.1, 32.2) umfasst, welche die Abtasteinheit (2) dabei an das Referenzelement (4, 4.1) drängen, und dass die Montagehilfe (3, 3.1, 3.3) dazu ausgebildet ist, dass diese nach erfolgter Justierung von der Abtasteinheit (2) entfernbar ist.

2. Vorrichtung nach Anspruch 1, wobei die Abtasteinheit (2) dazu ausgebildet ist mit dem Referenzelement (4, 4.1) einen Formschluss zu bilden, der die Abtasteinheit (2) relativ zum Referenzelement (4, 4.1) in Richtungen quer zur Drehachse (D) fesselt, aber Drehbewegungen um die Drehachse (D) zulässt.

3. Vorrichtung nach Anspruch 2, wobei zur Bildung des Formschlusses eine Ausnehmung (22) an einer Außenwand (21) der Abtasteinheit (2) vorgesehen ist, an welche das Referenzelement (4, 4.1) anlegbar ist.

4. Vorrichtung nach Anspruch 3, wobei die Ausnehmung (22) eine V-Nut ist.

5. Vorrichtung nach einem der vorhergehenden Ansprüche, wobei die Montagehilfe (3, 3.1, 3.3) zumindest zwei einander gegenüberliegende Arme (31, 32; 31.1, 32.1, 32.2) aufweist, welche die Abtasteinheit (2) an zumindest zwei gegenüberliegenden Seiten klemmend umgreift, wobei zumindest einer dieser Arme (31; 31.1, 31.2) elastisch ausgebildet ist, um die Abtasteinheit (2) an das Referenzelement (4, 4.1) zu spannen.

6. Vorrichtung nach einem der vorhergehenden Ansprüche, wobei die Montagehilfe (3, 3.1, 3.3) dazu ausgebildet ist mit dem Referenzelement (4, 4.1) einen Formschluss zu bilden, der die Montagehilfe (3, 3.1, 3.3) relativ zum Referenzelement (4, 4.1) in Richtungen quer zur Drehachse (D) fesselt, aber Drehbewegungen der Montagehilfe (3, 3.1, 3.3) um die Drehachse (D) zulässt.

7. Vorrichtung nach einem der vorhergehenden Ansprüche, wobei die Montagehilfe (3, 3.1, 3.3) zumindest eine Öffnung (34) aufweist, in die ein Werkzeug (6) einsteckbar ist, um damit die Montagehilfe (3, 3.1, 3.3) um die Drehachse (D) zu verschwenken.

8. Vorrichtung nach einem der vorhergehenden Ansprüche, wobei an die Montagehilfe (3.1) eine Handhabe (9) angeformt ist, um die Montagehilfe (3.1) um die Drehachse (D) zu verschwenken.

9. Positionsmesseinrichtung mit einem Maßstab (1, 1.3) und einer Vorrichtung nach einem der vorhergehenden Ansprüche.

10. Verfahren zur Montage einer Abtasteinheit (2) einer Positionsmesseinrichtung an einem Objekt (5) mit folgenden Verfahrensschritten:
- zur Verfügung stellen eines Referenzelementes (4, 4.1) mit einer Drehachse (D);
- Verbinden der Abtasteinheit (2) mit einer Montagehilfe (3, 3.1, 3.3) derart, dass die Montagehilfe (3, 3.1, 3.3) die Abtasteinheit (2) an das Referenzelement (4, 4.1) drängt, wobei die Montagehilfe (3, 3.1, 3.3) mit der Abtasteinheit (2) einen drehfesten Formschluss bildet;
- Justieren der Abtasteinheit (2), indem die die Abtasteinheit (2) tragende Montagehilfe (3, 3.1, 3.3) um die Drehachse (D) des Referenzelementes (4, 4.1) verschwenkt wird;
- ortsfeste Befestigung der Abtasteinheit (2) an dem Objekt (5) in der einjustierten Drehlage;
- Entfernen der Montagehilfe (3, 3.1, 3.3) von der Abtasteinheit (2).

11. Verfahren zur Montage einer Abtasteinheit (2) nach Anspruch 10, wobei das zur Verfügung stellen des Referenzelementes (4) erfolgt, indem dieses an dem Objekt (5) angebracht wird.

12. Verfahren zur Montage einer Abtasteinheit (2) nach Anspruch 10, wobei das zur Verfügung stellen des Referenzelementes (4.1) erfolgt, indem dieses an einem Objekt (7) angebracht wird, an dem der Maßstab (1) angeordnet ist, welcher bei der Positionsmessung von der Abtasteinheit (2) abgetastet wird.

## Claims

1. Device having a scanning unit (2) and a mounting aid (3, 3.1, 3.3) for adjusting the scanning unit (2), **characterized in that**
the mounting aid (3, 3.1, 3.3) is designed to secure the scanning unit (2) to the mounting aid (3, 3.1, 3.3) in such a way that the scanning unit (2) can be pivoted about a rotational axis (D) of a reference element (4, 4.1) by means of the mounting aid (3, 3.1, 3.3) supporting said scanning unit (2), wherein the mounting aid (3, 3.1, 3.3) forms a rotationally fixed form fit with the scanning unit (2) and wherein the mounting aid (3, 3.1, 3.3) comprises means (31, 32; 31.1, 32.1, 32.2) which in the process force the scanning unit (2) against the reference element (4, 4.1), and **in that**
the mounting aid (3, 3.1, 3.3) is designed so that it can be removed from the scanning unit (2) after adjustment has taken place.

2. Device according to Claim 1, wherein the scanning unit (2) is designed to form a form fit with the reference element (4, 4.1), which form fit locks the scanning unit (2) relative to the reference element (4, 4.1) in directions transverse with respect to the rotational axis (D), but permits rotational movements about the rotational axis (D).

3. Device according to Claim 2, wherein, in order to form the form fit, a recess (22) is provided on an outer wall (21) of the scanning unit (2), against which the reference element (4, 4.1) can be brought to bear.

4. Device according to Claim 3, wherein the recess (22) is a V-shaped groove.

5. Device according to one of the preceding claims, wherein the mounting aid (3, 3.1, 3.3) has at least two arms (31, 32; 31.1, 32.1, 32.2) which lie opposite one another and which engage around the scanning unit (2) in a clamping fashion on at least two opposite sides, wherein at least one of these arms (31; 31.1, 31.2) is embodied in an elastic fashion in order to clamp the scanning unit (2) to the reference element (4, 4.1).

6. Device according to one of the preceding claims, wherein the mounting aid (3, 3.1, 3.3) is designed to form a form fit with the reference element (4, 4.1), which form fit locks the mounting aid (3, 3.1, 3.3) relative to the reference element (4, 4.1) in directions transverse with respect to the rotational axis (D), but permits rotational movements of the mounting aid (3, 3.1, 3.3) about the rotational axis (D).

7. Device according to one of the preceding claims, wherein the mounting aid (3, 3.1, 3.3) has at least one opening (34) into which a tool (6) can be plugged in order to thereby pivot the mounting aid (3, 3.1, 3.3) about the rotational axis (D).

8. Device according to one of the preceding claims, wherein a handle (9) is integrally formed onto the mounting aid (3.1) in order to pivot the mounting aid (3.1) about the rotational axis (D).

9. Position-measuring device having a scale component (1, 1.3) and a device according to one of the preceding claims.

10. Method for mounting a scanning unit (2) of a position-measuring device on an object (5) having the following method steps:
- making available a reference element (4, 4.1) with a rotational axis (D);
- connecting the scanning unit (2) to a mounting aid (3, 3.1, 3.3) in such a way that the mounting aid (3, 3.1, 3.3) forces the scanning unit (2) against the reference element (4, 4.1), wherein the mounting aid (3, 3.1, 3.3) forms a rotationally fixed form fit with the scanning unit (2);
- adjusting the scanning unit (2) by pivoting the mounting aid (3, 3.1, 3.3) which supports the scanning unit (2) about the rotational axis (D) of the reference element (4, 4.1);
- attaching the scanning unit (2) in a positionally fixed fashion to the object (5) in the adjusted rotational position; and
- removing the mounting aid (3, 3.1, 3.3) from the scanning unit (2).

11. Method for mounting a scanning unit (2) according to Claim 10, wherein the reference element (4) is made available by fastening it to the object (5).

12. Method for mounting a scanning unit (2) according to Claim 10, wherein the reference element (4.1) is made available by fastening it to an object (7) on which the scale component (1) is arranged, said scale component (1) being scanned by the scanning unit (2) during the position measurement.

## Revendications

1. Ensemble doté d'une unité de palpage (2) et d'un accessoire de montage (3, 3.1, 3.3) permettant d'ajuster l'unité de palpage (2),
**caractérisé en ce que**
l'accessoire de montage (3, 3.1, 3.3) est configuré pour maintenir l'unité de palpage (2) sur l'accessoire de montage (3, 3.1, 3.3) de telle sorte que l'unité de palpage (2) puisse pivoter au moyen de l'accessoire de montage (3, 3.1, 3.3) qui la porte autour d'un axe de rotation (D) d'un élément de référence (4, 4.1),
**en ce que** l'accessoire de montage (3, 3.1, 3.3) forme avec l'unité de palpage (2) une liaison en correspondance géométrique solidaire en rotation et
**en ce que** l'accessoire de montage (3, 3.1, 3.3) comprend des moyens (31, 32; 31.1, 32.1, 32.2) qui repoussant l'unité de palpage (2) contre l'élément de référence (4, 4.1) et
**en ce que** l'unité de montage (3, 3.1, 3.3) est configurée de manière à pouvoir être retirée de l'unité de palpage (2) lorsque l'ajustement a été réalisé.

2. Ensemble selon la revendication 1, dans lequel l'unité de palpage (2) est configurée pour former avec l'élément de référence (4, 4.1) une liaison en correspondance géométrique qui immobilise l'unité de palpage (2) par rapport à l'élément de référence (4, 4.1) dans des directions transversales par rapport à l'axe de rotation (D) mais qui permet des déplacements de rotation autour de l'axe de rotation (D).

3. Ensemble selon la revendication 2, dans lequel une découpe (22) sur laquelle l'élément de référence (4, 4.1) peut être placé est prévue sur une paroi extérieure (21) de l'unité de palpage (2) pour former la liaison en correspondance géométrique.

4. Ensemble selon la revendication 3, dans lequel la découpe (22) est une rainure en V.

5. Ensemble selon l'une des revendications précédentes, dans lequel l'accessoire de montage (3, 3.1, 3.3) présente au moins deux bras (31, 32; 31.1, 32.1, 32.2) mutuellement opposés qui chevauchent de manière serrée l'unité de palpage (2) sur au moins deux côtés opposés, au moins l'un de ces bras (31, 31.1, 31.2) étant élastique pour serrer l'unité de palpage (2) contre l'élément de référence (4, 4.1).

6. Ensemble selon l'une des revendications précédentes, dans lequel l'accessoire de montage (3, 3.1, 3.3) est configuré pour former avec l'élément de référence (4, 4.1) une liaison en correspondance géométrique qui immobilise l'unité de palpage (2) par rapport à l'élément de référence (4, 4.1) dans des directions transversales par rapport à l'axe de rotation (D) mais qui permet des déplacements de rotation autour de l'axe de rotation (D).

7. Ensemble selon l'une des revendications précédentes, dans lequel l'accessoire de montage (3, 3.1, 3.3) présente au moins une ouverture (34) dans laquelle un outil (6) peut être inséré pour ainsi faire pivoter l'accessoire de montage (3, 3.1, 3.3) autour de l'axe de rotation (D).

8. Ensemble selon l'une des revendications précédentes, dans lequel une poignée (9) est formée sur l'accessoire de montage (3.1) pour faire pivoter l'accessoire de montage (3.1) autour de l'axe de rotation (D).

9. Dispositif de mesure de position présentant une échelle (1, 1.3) et un ensemble selon l'une des revendications précédentes.

10. Procédé de montage d'une unité de palpage (2) d'un dispositif de mesure de position sur un objet (5), le procédé présentant les étapes suivantes :
préparation d'un élément de référence (4, 4.1) doté d'un axe de rotation (D),
liaison de l'unité de palpage (2) à l'accessoire de montage (3, 3.1, 3.3) de telle sorte que l'accessoire de montage (3, 3.1, 3.3) repousse l'unité de palpage (2) contre l'élément de référence (4, 4.1), l'accessoire de montage (3, 3.1, 3.3) formant avec l'unité de palpage (2) une liaison en correspondance géométrique solidaire en rotation,
ajustement de l'unité de palpage (2) en faisant pivoter l'accessoire de montage (3, 3.1, 3.3) qui porte l'unité de palpage (2) autour de l'axe de rotation (D) de l'élément de référence (4, 4.1),
fixation et immobilisation de l'unité de palpage (2) sur l'objet (5) dans la position de rotation qui a été ajustée et
enlèvement de l'accessoire de montage (3, 3.1, 3.3) de l'unité de palpage (2).

11. Procédé de montage d'une unité de palpage (2) selon la revendication 10, dans lequel la préparation de l'élément de référence (4) s'effectue en plaçant ce dernier sur l'objet (5).

12. Procédé de montage d'une unité de palpage (2) selon la revendication 10, dans lequel la préparation de l'élément de référence (4.1) s'effectue en plaçant ce dernier sur un objet (7) sur lequel est située l'échelle de mesure (1) qui est palpée par l'unité de palpage (2) lors de la mesure de position.
